# EUROPÄISCHE PATENTSCHRIFT

(11) **EP 3 612 383 B1**
(45) Veröffentlichungstag und Bekanntmachung des Hinweises auf die Patenterteilung: **01.05.2024**
(21) Anmeldenummer: 18728141.5
(22) Anmeldetag: 30.05.2018
(51) Int. Cl.: B32B 15/00, B33Y 80/00, B66C 23/62

(54) **TRAGWERK FÜR EINEN KRAN UND ÄHNLICHE ARBEITSMASCHINEN, SOWIE KRAN MIT EINEM SOLCHEN TRAGWERK**
SUPPORTING FRAMEWORK FOR A CRANE AND SIMILAR WORK MACHINES, AND CRANE HAVING SUCH A SUPPORTING FRAMEWORK
STRUCTURE PORTEUSE POUR GRUE ET ENGINS DE TRAVAUX PUBLICS ANALOGUES AINSI QUE GRUE POURVUE D'UNE TELLE STRUCTURE PORTEUSE

(30) Priorität: 31.05.2017 DE 202017103274 U; 06.07.2017 DE 202017104032 U
(43) Veröffentlichungstag der Anmeldung: 26.02.2020
(73) Patentinhaber: Liebherr-Werk Biberach GmbH, 88400 Biberach an der Riss (DE)
(72) Erfinder: MAYER, Joachim, 88400 Biberach (DE)
(74) Vertreter: Thoma, Michael
(86) Internationale Anmeldenummer: PCT/EP2018/064153
(87) Internationale Veröffentlichungsnummer: WO 2018/219993

(56) Entgegenhaltungen:
- EP-A2- 2 039 498
- WO-A1-2013/078919
- WO-A1-2017/017450
- WO-A1-2018/011271
- DE-U1-202017 000 487
- US-A1- 2011 240 582

## Beschreibung

Die vorliegende Erfindung betrifft ein Tragwerk eines Krans, Hebezeugs, Materialumschlaggeräts oder einer ähnlichen Arbeitsmaschine, wobei das Tragwerk zumindest abschnittsweise als Fachwerk ausgebildet ist, dessen Längs- und Quergurte von länglichen Tragwerksstreben (9) gebildet sind, die zumindest abschnittsweise als Hohlprofil ausgebildet und an Knotenpunkten des Fachwerks miteinander verbunden sind. Die Erfindung betrifft auch eine solche Arbeitsmaschine mit einem solchen Tragwerk.

US 2011/240582 A1 offenbart ein Tragwerk gemäß dem Oberbegriff des Anspruchs 1.

Hochbelastete Tragwerke von Arbeitsmaschinen wie Kranen, bei denen das Eigengewicht von größerer Bedeutung ist, können bislang die auseinanderlaufenden Anforderungen leichtgewichtige Bauweise einerseits und ausreichende, sicherheitsverlässliche Festigkeit andererseits bislang oft nur bedingt erfüllen. Da die sicherheitsrelevante Festigkeit oberste Priorität hat, werden Tragwerksbauteile unter Hinzurechnung von Sicherheiten auf die höchsten Belastungen ausgelegt, was in weniger belasteten Tragwerksabschnitten regelmäßig zu Überdimensionierungen und damit erhöhtem Bauteilgewicht führt. Insbesondere ist es oft so, dass die für die Bauteilauslegung maßgebliche Spitzenbelastung nur in bestimmten Abschnitten des Tragwerks auftritt, während in anderen Tragwerksabschnitten deutlich geringere Kräfte bzw. Spannungen wirken.

In diesen weniger stark belasteten Tragwerksabschnitten könnten die Tragwerkselemente an sich leichter dimensioniert werden, ohne dass die Festigkeit bzw. Sicherheit Schaden nimmt. Allerdings ist eine solche bereichsweise unterschiedliche Bauteildimensionierung fertigungstechnisch schwierig zu realisieren, insbesondere wenn das Tragwerk aufgrund der geforderten Festigkeit bei gleichzeitig nur begrenzt realisierbaren Materialkosten aus einem metallischen Werkstoff, insbesondere Stahl gefertigt werden soll.

Bei Kranen wie Turmdrehkranen oder Hafenkranen, oder Baumaschinen wie Seilbagger haben sich als Tragwerke überwiegend Fachwerkskonstruktionen durchgesetzt, die aus länglichen Tragwerksstreben in Form von Längsgurten und Fachwerksstreben zusammengesetzt sind. Dabei können zumindest einige der Tragwerksstreben zumindest abschnittsweise als Hohlprofil ausgebildet sein, um mit relativ leichtgewichtigen Profilen hohe Biege- und Knicksteifigkeiten zu erzielen, wobei aber auch Vollmaterialstreben Verwendung finden können, um höhere Festigkeiten zu erzielen. Bei anderen Krantypen wie beispielsweise Teleskopkranen sind als Tragwerk im Querschnitt relativ großvolumige Teleskopschüsse bekannt, die aus Stahlblechen gewalzt bzw. gerollt oder gekantet und zusammengeschweißt sein können, wobei an den Teleskopschusskrägen Verstärkungsbleche angeschweißt sein können. Ähnliche Tragwerkstreben in Form von Blechprofilen sind beispielsweise auch als Abstützstreben von ausfahrbaren Abstützungen am Unterwagen von Baumaschinen bekannt, die zumeist aus länglichen Profilträgern bestehen.

Um zumindest ansatzweise eine Anpassung der Tragelementequerschnitte an die tatsächlich wirkenden Belastungen zu erreichen, ist es bekannt, an stärker beanspruchten Abschnitten der Tragwerksstreben Aufdoppelungen vorzunehmen, beispielsweise Verstärkungsbleche anzuschweißen, Aussteifungen anzunieten oder Verstärkungen wie Beulsteifigkeitsleisten anzuschrauben. Zudem werden an den Enden der Fachwerksstreben oft Anschlusslaschen angeschweißt, um Verbolzungspunkte zu schaffen.

Die WO 2013/078919 A1 zeigt einen Tragarm für eine Beton verarbeitende Maschine, der mehrschichtig aus einem faserverstärktem Material gebildet ist und im Inneren durch Querstege versteift ist. Die Schrift EP 20 39 498 A2 zeigt einen Knickarm für eine mobile Betonpumpe, dessen Knickarm-Abschnitte aus laminierten, faserverstärkten Trägern bestehen, wobei an den Anschlussenden der faserverstärkten Träger Verdickungen vorgesehen und metallische Lagerbuchsen einlaminiert sind, um angrenzende Trägerteile anschrauben zu können. Die DE 20 2017 000 487 U1 zeigt eine Seilwinde mit einem Gehäuse, das im 3D-Druck aus dem Werkstoff PLA gefertigt sein soll. Die WO 2017/017450 A1 zeigt einen Turmkran, an dessen Lasthaken ein Pendeldämpfungsmechanismus angelenkt ist, der mehrere Stellaktoren umfasst, die ein mit der Last verbindbares Trägerteil verkippen können. Das besagte Lastträgerteil kann dabei im 3D-Druck hergestellt sein. Ferner zeigt die nachveröffentlichte Schrift WO 2018/011271 A1 einen Großmanipulator nach Art eines Knickarm-Roboters, dessen Tragarmteile aus geschlossenwandigen Hohlprofilen bestehen sollen, die an den Wandungen Vertiefungen besitzen, deren Tiefe kleiner als die Wandstärke ist, sodass die Profilquerschnitte geschlossen bleiben.

Der vorliegenden Erfindung liegt hiervon ausgehend die Aufgabe zugrunde, ein verbessertes Tragwerk der eingangs genannten Art sowie einen verbesserten Kran mit einem solchen Tragwerk zu schaffen, die Nachteile des Standes der Technik vermeiden und Letzteren in vorteilhafter Weise weiterbilden. Insbesondere soll eine verbesserte Anpassung der Bauteilstruktur an die im Arbeitsbetrieb auftretende Belastung erzielt werden, um bei verlässlich ausreichender Festigkeit eine leichtere Bauweise zu erreichen.

Erfindungsgemäß wird die genannte Aufgabe durch ein Tragwerk gemäß Anspruch 1, eine Arbeitsmaschine gemäß Anspruch 14 sowie einen Kran mit einem solchen Tragwerk gemäß Anspruch 16 gelöst. Bevorzugte Ausgestaltungen der Erfindung sind Gegenstand der abhängigen Ansprüche.

Es wird also erfindungsgemäß vorgeschlagen, als Verstärkung keine separaten Aufdoppelplatten oder separate Aufnahmelaschen an dem Tragwerkselement anzuschweißen oder anzuschrauben, sondern die Tragwerkstrebe im benötigten, hochbelasteten Bereich mit integral einstückig, nahtfrei angeformten Verstärkungsschichten zu versehen, um dort sanft und harmonisch eine organisch gewachsene Wandstärken- und/oder Querschnittserhöhung zu erzielen. Erfindungsgemäß besitzt die Tragwerksstrebe zumindest einen integral einstückig angeformten, schichtweise aufgebauten Verstärkungsabschnitt. Dieser im Schichtbau geformte Verstärkungsabschnitt kann insbesondere mittels 3D-Druck bzw. Stereolitographie, grundsätzlich aber auch durch anderen additive Aufbauverfahren gefertigt sein, sodass die Verstärkungsschichten integral einstückig mit sich und dem restlichen Korpus der Tragwerksstrebe verbunden sind.

Dabei ist der schichtweise aufgebaute Verstärkungsabschnitt aus einem metallischen Werkstoff geformt, wobei auch der restliche Korpus der Tragwerksstrebe aus demselben oder einem anderen metallischen Werkstoff geformt sein kann. Der Verstärkungsabschnitt kann im 3D-Druckverfahren, Stereolitographieverfahren oder einem anderen additiven Aufbauverfahren aus Metallschichten aufgebaut sein. Bei geringer belasteten Elementen können auch Kunststoffschichten Verwendung finden, wobei auch ein Schichtaufbau mit schichtweise verschiedenen Werkstoffen vorgesehen sein kann.

Dabei ist die Tragwerkstrebe zumindest abschnittsweise als Hohlprofil ausgebildet, wobei der zumindest eine schichtweise aufgebaute Verstärkungsabschnitt gezielt an den Abschnitten, die eine erhöhte Festigkeit benötigen, angeformt sein kann. Hierdurch kann ein sehr leichtes Bauteil mit trotzdem ausreichender Festigkeit unter Ausnutzung des Werkstoffs erzielt werden. Der schichtweise aufgebaute Verstärkungsabschnitt kann dabei im Inneren und/oder an der Aussenseite des Hohlprofils angeformt sein.

Die Tragwerkstrebe kann aber auch abschnittsweise als Vollmaterialstrebe ausgebildet sein, wobei in diesem Fall der schichtweise aufgebaute Verstärkungsabschnitt aussenseitig an den Vollmaterialabschnitt angeformt sein kann.

Nach einem weiteren Aspekt der vorliegenden Erfindung kann die Tragwerksstrebe abschnittsweise oder insgesamt eine organische und/oder bionische Konturierung besitzen, die abweichend von den üblichen mathematischen Grundkörpern wie Zylinder, Kegel oder Platte sich graduell verändernde Krümmungen und/oder sich graduell verändernde Wandstärken und/oder sich graduell verändernde Querschnittsmaße aufweisen kann. Vorteilhafterweise können solche organischen und/oder bionischen Konturen der Tragwerksstrebe schichtweise aufgebaut, insbesondere im 3D-Druck gefertigt sein, wobei mittels eines solchen schichtweisen Aufbaus auch asymmetrische Wölbungen und Konturen sowie asymmetrische und/oder nur bereichsweise vorgesehene Verdickungen realisierbar sind.

Insbesondere kann die Tragwerksstrebe zumindest im Bereich des Verstärkungsabschnitts als Freiformkörper mit sich kontinuierlich und stetig bzw. stufenlos harmonisch ändernden Wandstärken ausgebildet sein. Durch eine solche Freiformflächenkonturierung der Innen- und/oder Außenwandungen der Tragwerksstrebe mit vorzugsweise harmonischen, stufenlosen Konturübergängen zwischen verschiedenen, mehrachsig gekrümmten Flächenabschnitten kann eine hervorragende Anpassung an den im Bauteil auftretenden Kraftfluss und die sich einstellenden Bauteilbelastungen erzielt werden, ohne dass in weniger stark belasteten Bereichen Überdimensionierungen und in den Abschnitten, in denen Spitzenbelastungen wirken, Festigkeitsprobleme auftreten.

Die bionische Freiformflächenkonturierung kann dabei einzelne Tragwerkselemente bzw. -streben betreffen, aber auch auf das gesamte Tragwerk oder zumindest einen Teilabschnitt des Tragwerks angewendet werden. Beispielsweise kann ein Fachwerkträger wie beispielsweise ein Kranausleger, Kranturm oder ein Seilbagger-Ausleger einzelne Fachwerkstreben aufweisen, die in der genannten Weise als Freiformflächen konturierte Innen- und/oder Außenflächen aufweisen. Alternativ oder zusätzlich kann aber auch der gesamte Ausleger bzw. das gesamte Tragwerk eine organische Freiformflächenkonturierung besitzen.

Insbesondere kann eine den Fachwerkträger umhüllende Hüllfläche abweichend von bisherigen Auslegern, deren Hüllfläche meist einen Quader oder ein dreieckiges Prisma bildet, im Längsschnitt betrachtet eine einachsige oder mehrachsige Krümmung und/oder sich entlang der Längserstreckung des Auslegers verändernde Querschnittsmaße besitzen, wobei in verschiedenen Längsschnittebenen verschiedene Krümmungsverläufe vorgesehen sein können und sich die Querschnittsmaße über die Längserstreckung betrachtet kontinuierlich, stufenlos und damit harmonisch ändern können. Beispielsweise kann ein solcher Fachwerksausleger in einer horizontalen Längsschnittebene und/oder in einer vertikalen Längsschnittebene betrachtet eine harmonische, konvexe Hüllflächenkontur besitzen, sodass sich der Querschnitt des Auslegers von einem maximalen Querschnittsmaß in einen Mittelabschnitt zu beiden Enden hin harmonisch verjüngt, wobei gegebenenfalls, an Endabschnitten des Auslegers betrachtet auch wieder ein Querschnittsanstieg beispielsweise in Form einer Auslegerverdickung ausgebildet sein kann, sodass die äußere Hüllkontur des Auslegers näherungsweise wie ein Knochen erscheint, an den endseitig eine Gelenksverdickung angeformt ist.

Alternativ oder zusätzlich kann ein Turm eines Turmdrehkrans, der als Fachwerksausleger ausgebildet sein kann, sich in seinem Querschnittsmaß, angepaßt an seine Belastung, im Fußbereich des Auslegers verdicken und weiter nach oben hin zum Anlenkpunkt des Auslegers wieder verjüngen und gegebenenfalls direkt im Bereich des Auslegeranlenkpunkts wiederum eine Verdickung aufweisen, sodass auch die äußere Hüllkontur des Kranturms eine knochenartige, organische Konturierung besitzt. Dabei kann gegebenenfalls in verschiedenen Schnittebenen eine verschieden beschaffene Hüllflächen-Schnittkontur vorgesehen sein, wobei beispielsweise in einer vertikalen Längsschnittebene enthaltend den Ausleger eine stärkere, konvexe Hüllflächenkontur vorgesehen sein kann als in einer vertikalen Schnittebene senkrecht hierzu.

Betrachtet man horizontale Querschnittsebenen des Kranturms, kann die Fachwerk-Hüllfäche beispielsweise oval oder ellipsenförmig ausgebildet sein und eine längere Hauptachse in einer den Kranausleger enthaltenen, vertikalen Schnittebene haben. Alternativ oder zusätzlich hierzu können in Querschnittsebenen in verschiedener Höhe des Kranturms die Hauptachsen der Querschnittskontur der Hüllfläche unterschiedlich stark variieren. Beispielsweise kann eine Querachse quer zur Vertikalen Ebene durch den Ausleger über die Höhe des Turms betrachtet im Wesentlichen gleichbleiben oder sich nur schwach ändern, beispielsweise zur Mitte hin anwachsen, während die Hauptachse des Querschnittsprofils parallel zur vertikalen Schnittebene durch den Ausleger über die Höhe des Turms sich relativ stark ändern kann, beispielsweise zur Mitte hin anwachsen und/oder zu den Endabschnitten hin abnehmen. Je nach Maschinentyp und Belastungsfall können dabei verschiedene Hüllflächenkonturierungen vorteilhaft sein.

In Weiterbildung der Erfindung können aber insbesondere auch einzelne Tragwerksabschnitte, insbesondere längliche Tragwerksstreben besondere Konturierungen und/oder Wandstärkenverläufe und/oder Verstärkungsabschnitte aufweisen. In vorteilhafter Weiterbildung der Erfindung kann insbesondere ein Verstärkungsabschnitt im Inneren des Hohlprofilabschnitt eines Tragwerkelements vorgesehen sein, wobei ein solcher Verstärkungsabschnitt im Hohlprofil vorteilhafterweise integral einstückig an der Hohlprofilwandung angeformt sein und/oder im Schichtaufbau ausgebildet sein kann, beispielsweise durch 3D-Druck gefertigt sein kann.

Insbesondere kann ein solcher Verstärkungsabschnitt eine im Inneren des Hohlprofils liegende Wabenstruktur und/oder Röhrenknochenstruktur aufweisen, wobei eine solche Waben- und/oder Röhrenknochenstruktur vorteilhafterweise aus einem metallischen Werkstoff gefertigt und integral einstückig an die Hohlprofilwandung der Tragwerksstrebe angeformt sein kann.

Zusätzlich kann ein Verstärkungsabschnitt auch eine vorzugsweise im Inneren eines Hohlprofilabschnitts der Tragwerksstrebe liegende Verästelungsstruktur mit unregelmäßig geformten und/oder unregelmäßig angeordneten Verästelungsstreben aufweisen. Eine solche vogelnestartige Verästelung von Verstärkungsstreben im Inneren eines Hohlprofils kann dessen Knicksteifigkeit und Biegefestigkeit signifikant erhöhen, wobei sich die Verästelungsstreben vorteilhafterweise in verschiedene Richtungen erstrecken können und/oder einen gebogenen, gegebenenfalls auch unregelmäßigen Konturverlauf besitzen können. Alternativ oder zusätzlich können solche Verästelungsstreben auch ein sich über ihre Längserstreckung kontinuierlich, insbesondere stufenlos veränderndes Querschnittsmaß besitzen, beispielsweise zu den Enden hin, mit denen sie an das Hohlprofil angeformt sind, verdicken. Die Verästelungsstreben können hierbei Vollmaterialstreben oder selbst auch als Hohlprofilstreben ausgebildet sein, wobei gegebenenfalls sich verändernde Wandstärken vorgesehen sein können.

Zusätzlich kann als Verstärkungsabschnitt vorzugsweise im Inneren eines Hohlprofilabschnitts der Tragwerksstrebe auch einen Wolken- und/oder Schwammstruktur vorgesehen sein, bei der das die Verstärkungsstruktur bildende Material unregelmäßig durchlöchert ist, wie dies bei einem Schwamm oder auch Käse bekannt ist. Vorteilhafterweise kann eine solchen Wolken- und/oder Schwammstruktur aus einem metallischen Werkstoff gefertigt und integral einstückig an den restlichen Tragwerksstrebenkorpus angeformt sein. Alternativ oder zusätzlich kann die genannte Wolken- und/oder Schwammstruktur schichtweise aufgebaut sein. Alternativ oder zusätzlich zu im Inneren eines Hohlprofilabschnitts angeordneten Verstärkungsabschnitten kann die Tragwerksstrebe auch außen liegende Verstärkungsabschnitte aufweisen, die vorteilhafterweise integral einstückig angeformt und schichtweise aufgebaut sein können. Beispielsweise können an knickgefährdeten Stellen außenseitig sich in Längsrichtung der Strebe erstreckende Beulsteifigkeitsleisten angeformt sein.

Zusätzlich kann die Tragwerksstrebe an gegenüberliegenden Enden Verbindungsabschnitte zum Verbinden mit weiteren Tragwerkselementen aufweisen, wobei die Tragwerksstrebe zumindest in einem Mittelabschnitt zwischen den beiden Verbindungsabschnitten vorteilhafterweise einen sich kontinuierlich und stetig, insbesondere stufenlos änderndes Querschnittsmaß und/oder eine sich kontinuierlich und stetig, insbesondere stufenlos ändernde Wandstärke aufweisen kann. Beispielsweise kann die Tragwerkstrebe in einem Mittelabschnitt eine relativ große oder maximale Wandstärke aufweisen, die dann von dem Mittelabschnitt ausgehend zu den beiden gegenüberliegenden Enden hin kontinuierlich abnehmen kann, wobei dann an den Endabschnitten der Tragwerksstrebe selbst wieder eine Verdickung bzw. zunehmende Wandstärke vorgesehen sein kann, mit der die Tragwerksstrebe sanft und harmonisch in die verstärkten Verbindungsabschnitte übergeht.

Die genannten Verbindungsabschnitte in den Endbereichen der Tragwerkstrebe können beispielsweise als Vollmaterialabschnitte ausgebildet sein, während ein mittlerer Abschnitt der Tragwerksstrebe als Hohlprofil ausgebildet sein kann. Ungeachtet von der Lage und/oder Funktion der Vollmaterialabschnitte kann sich die Tragwerksstrebe also vorteilhafterweise durch eine Kombination von Hohlprofil und Vollmaterialabschnitten auszeichnen.

Das Tragwerk bildet ein Fachwerk und die genannte Tragwerksstrebe eine Fachwerksstrebe in Form eines Längsgurts oder einer Querverstrebung, wobei gemäß der Erfindung vorgesehen ist, dass die genannte Fachwerksstrebe integral einstückig und nahtfrei mit weiteren Fachwerkstreben des Fachwerks verbunden ist. Die Fachwerkstreben sind also nicht miteinander verschraubt oder verschweißt, sondern besitzen einen materialhomogenen Übergang, sodass eine nächste Strebe sozusagen aus der Basisstrebe herauswächst.

Zusätzlich zu partiell unterschiedlichen und/oder kontinuierlich variierenden Wandstärken, Querschnittsmaßen bzw. Schichtanzahlen kann die Tragwerksstrebe in Weiterbildung der Erfindung auch partiell unterschiedliche Materialbeschaffenheiten aufweisen, insbesondere an verschiedenen Strebenabschnitten aus verschiedenen Materialien und/oder Materialien verschiedener Beschaffenheiten aufgebaut sein, um an verschiedenen Strebenabschnitten verschiedene Bauteileigenschaften zu erzielen. Insbesondere können verschiedene Schichten aus verschiedenen Materialien bestehen und/oder aus Materialien mit verschiedenen Festigkeiten und/oder verschiedenen Materialeigenschaften bestehen. Beispielsweise kann in einem höher belasteten Bereich der Strebe eine Schicht aus einem Material höherer Festigkeit vorgesehen und in einem niedriger belasteten Strebenbereich eine Schicht aus einem Material verhältnismäßig niedrigerer Festigkeit verwendet werden.

Zusätzlich können aber auch einzelne Materialschichten partiell unterschiedlich ausgebildet sein, insbesondere aus unterschiedlichen Materialien und/oder gleichartigen Materialien, aber unterschiedlicher Materialeigenschaften aufgebaut sein. Beispielsweise kann eine ringförmige Materialschicht in einem ersten Sektor aus einem Material höherer Festigkeit und in einem zweiten, beispielsweise gegenüberliegenden Sektor der Ringschicht aus einem Material verhältnismäßig geringerer Festigkeit aufgebaut sein. Wird eine lineare Materialschicht betrachtet, beispielsweise eine in Längsrichtung der Strebe verlaufende Materialschicht, kann diese Materialschicht beispielsweise an einem endseitigen Abschnitt aus einem anderen Material bestehen als an einem gegenüberliegenden Endabschnitt, oder es kann ein Mittelabschnitt aus einem weniger festen Material gebildet sein, während dieselbe Schicht an ihren Endabschnitten aus einem höherfesten Material besteht.

Alternativ oder zusätzlich zur Verwendung partiell unterschiedlicher Materialfestigkeiten können aber auch andere Materialeigenschaften partiell variieren, beispielsweise korrosionsfestere Schichten und/oder weichere, nachgiebigere und/oder elastischere Schichten einerseits und härtere, weniger elastische und/oder steifere Materialschichten andererseits. Auch hier können die Materialeigenschaften von Schicht zu Schicht variieren, aber auch innerhalb derselben Schicht verschiedene Materialeigenschaften vorgesehen werden.

Vorteilhafterweise sind die partiell unterschiedlichen Materialeigenschaften bzw. die Strebenabschnitte mit solchen unterschiedlichen Materialeigenschaften integral einstückig miteinander angeformt und/oder stoffschlüssig miteinander verbunden.

Die Erfindung wird nachfolgend anhand bevorzugter Ausführungsbeispiele und zugehöriger Zeichnungen näher erläutert. In den Zeichnungen zeigen:

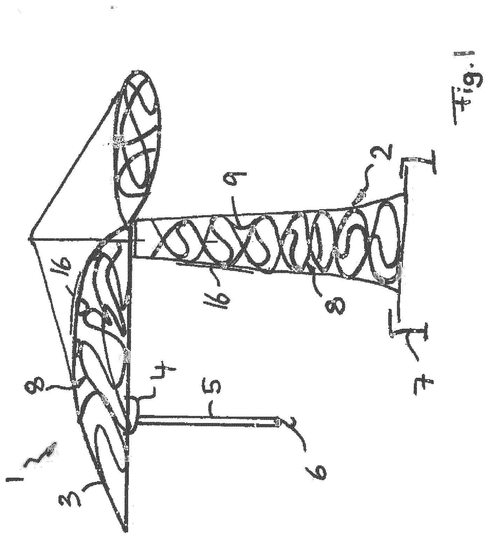

- Fig. 1:: eine schematische Seitenansicht eines Turmdrehkrans mit einem organisch aufgebauten Tragwerk umfassend einen Fachwerkturm und einen Fachwerkausleger mit Tragwerkstreben in bionischer Konturierung,

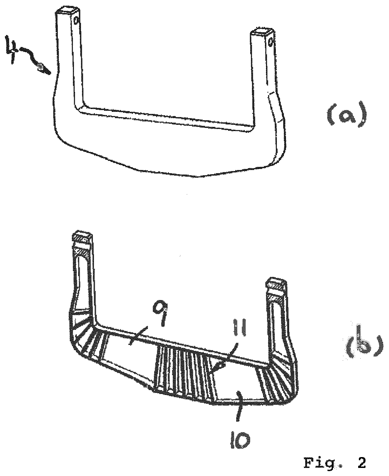

- Fig. 2:: eine Tragwerksstrebe nach einer vorteilhaften Ausführung der Erfindung in Form eines Laufkatzenträgers der Laufkatze des Krans aus Fig. 1, wobei die Teilansicht (a) eine perspektivische Aussenansicht des Laufkatzenträgers und die Teilansicht (b) eine perspektivische Schnittansicht des Laufkatzenträgers zeigt, die die im Inneren des Laufkatzenträgers vorgesehenen Verstärkungsstrukturen zeigt,

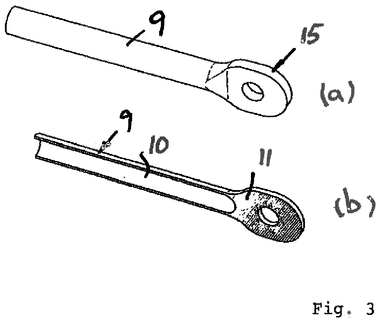

- Fig. 3:: eine perspektivische Teilansicht einer Tragwerksstrebe, die ein Hohlprofil und ein daran angeformtes Anlenkauge aufweist, wobei die Teilansicht (a) eine perspektivische Aussenansicht und die Teilansicht (b) eine Längsschnittansicht zur Darstellung des Innenlebens zeigt,

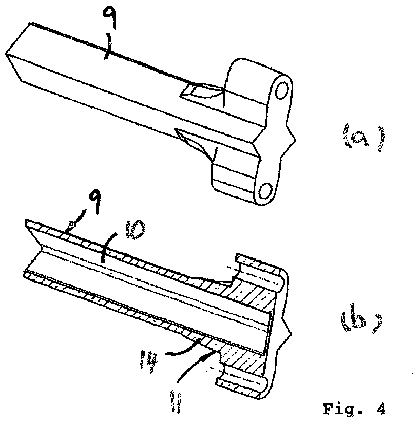

- Fig. 4:: eine perspektivische Teilansicht einer Tragwerksstrebe mit einem Schraubverbindungsende, wobei die Teilansicht (a) eine perspektivische Aussenansicht und die Teilansicht (b) eine perspektivische Schnittansicht zur Verdeutlichung der sich ändernden Wandstärken zeigt,

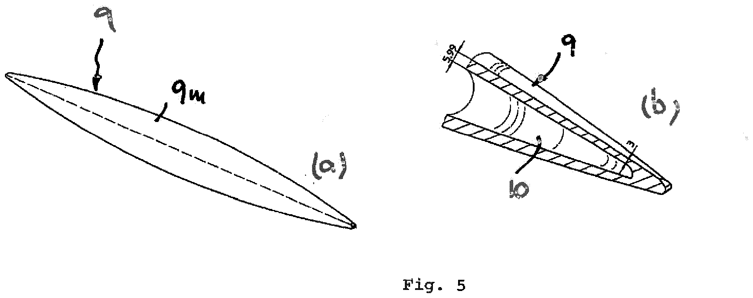

- Fig. 5:: eine perspektivische Darstellung einer Tragwerksstrebe in Form eines Druckstabs, dessen Querschnittsmaß sich von einem maximalen Durchmesser in Stabmitte zu den Enden hin verjüngt, wobei die Teilansicht (a) eine Aussenansicht und die Teilansicht (b) eine teilweise Schnittansicht zur Verdeutlichung des Hohlprofils zeigt,

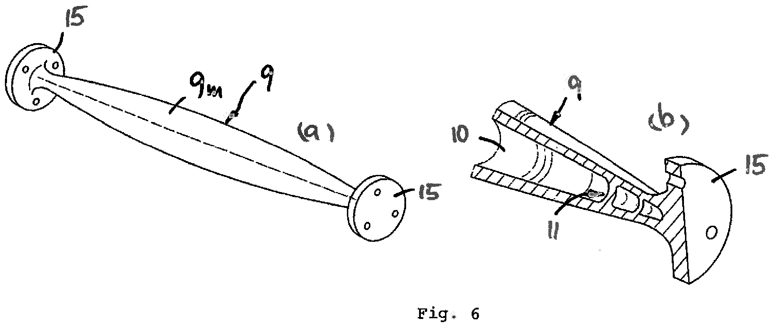

- Fig. 6:: eine perspektivische Darstellung einer Tragwerksstrebe in Form eines Druckstabs mit angeformten Befestigungsflanschen an den Stabenden, wobei die Teilansicht (a) eine perspektivische Aussenansicht und die Teilansicht (b) eine teilweise Schnittansicht zur Darstellung der im Inneren des Hohlprofils vorgesehenen Versteifungsrippen und des angeformten Vollmaterialquerschnitts des Befestigungsflansches zeigt,

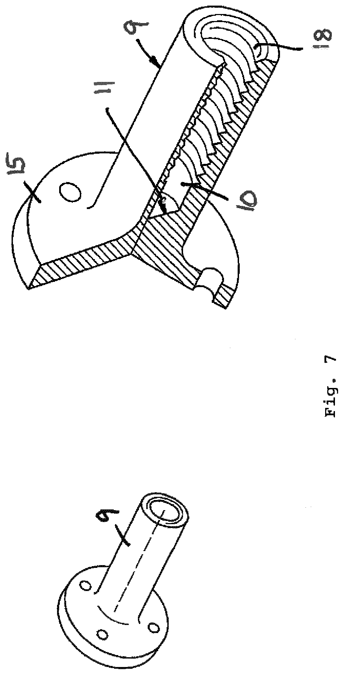

- Fig. 7:: eine perspektivische Darstellung eines Tragwerkelements in Form eines Flanschelements mit Schraubgewindeansatz, wobei die Teilansicht (a) eine Aussenansicht und die Teilansicht (b) eine Schnittansicht zur Verdeutlichung des Wandstärkeverlaufs zeigt,

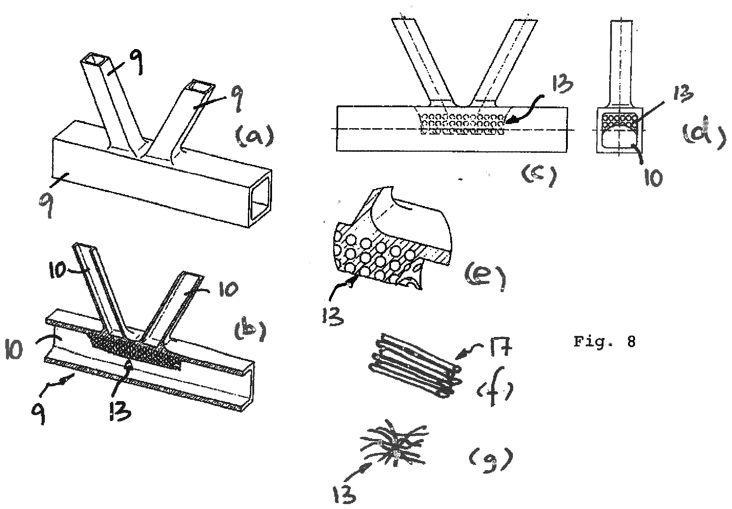

- Fig. 8:: eine ausschnittsweise Darstellung des Knotenpunkts zwischen mehreren Fachwerkstreben des Krantragwerks auf Fig. 1, wobei die Teilansicht (a) eine perspektivische Aussenansicht, die Teilansicht (b) eine Längsschnittansicht zur Darstellung der wabenförmigen Versteifungsstruktur im Inneren der Fachwerksstrebe, die Teilansicht (c) eine Seitenansicht, die Teilansicht (d) eine Querschnittsansicht, die Teilansicht (e) eine ausschnittsweise vergrößerte Schnittansicht der Wabenstruktur, die Teilansicht (f) eine Röhrenknochenstruktur und die Teilansicht (g) eine Verästelungsstruktur zeigt, und

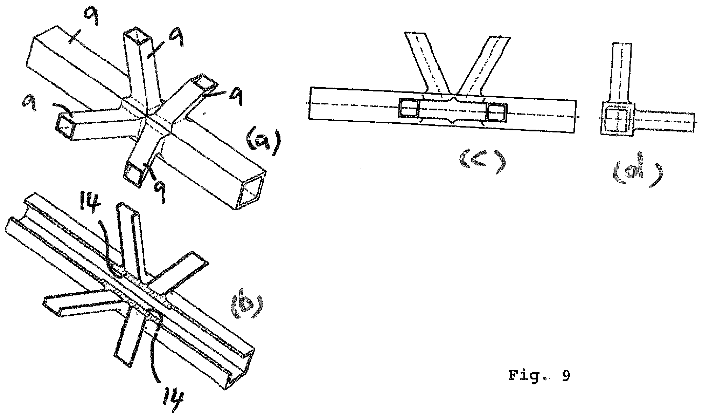

- Fig. 9:: eine perspektivische Darstellung eines Knotenpunkts des Fachwerk-Tragwerks des Krans aus Fig. 1, bei dem die Wandstärken des Hohlprofils im Bereich der Anschlusspunkte der Fachwerkstreben partiell verdickt ist, wobei die Teilansicht (a) eine Aussenansicht, die Teilansicht (b) eine Schnittansicht zur Verdeutlichung der Wandstärkeverdickung im Anschlussbereich, die Teilansicht (c) eine Seitenansicht und die Teilansicht (d) eine Querschnittsansicht zeigt.

Wie Fig. 1 zeigt, kann das erfindungsgegenständliche Tragwerk 8 Teil eines Krans 1 sein und dessen Ausleger 3 und - bei Ausbildung des Krans als Turmdrehkran - dessen Turm bilden. Es wird jedoch darauf hingewiesen, dass das Tragwerk auch Teil anderer, vergleichbarer Arbeitsmaschinen mit hochbelasteten Strukturen sein kann, wobei solche weitere Arbeitsmaschinen beispielsweise einen Seilbagger, einen Mäkler, ein Hebezeug wie beispielsweise ein Radlader oder ein Materialumschlagsgerät wie beispielsweise einen Abraumförderer oder eine Baumaschine sein kann.

Wie Fig. 1 weiterhin verdeutlicht, kann das Tragwerk 8 insbesondere als Fachwerk oder Fachwerkträger ausgebildet sein, wobei das Tragwerk jedoch auch andere Tragwerkskomponenten wie beispielsweise den Abstützfuss 7 des Krans umfassen kann.

Wie Fig. 1 zeigt, kann der Kran 1 als Turmdrehkran ausgebildet sein, der einen sich aufrecht erstreckenden Turm 2 umfasst, der einen sich näherungsweise horizontal erstreckenden Ausleger 3 und gegebenenfalls einen Gegenausleger trägt. Von dem sich etwa horizontal erstreckenden Ausleger 3 kann ein Hubseil 5 abgelassen werden, welches einen Lasthaken 6 trägt, wobei das Hubseil 5 von einer Laufkatze 4 ablaufen kann, die entlang des Auslegers 3 verfahrbar sein kann.

Das Tragwerk 8 in Form des Turms 2 und/oder des Auslegers 3 kann insgesamt betrachtet eine organische und/oder bionische Konturierung besitzen. Beispielsweise kann eine den Turm 2 umgebende Hüllfläche und/oder eine den Ausleger 3 umschließende Hüllfläche 16 abweichend von bisherigen, konventionellen Turm- und/oder Auslegerhüllflächen eine gebogene Aussenkonturierung besitzen, die in jeweiliger Längsrichtung betrachtet eine bogenförmige Krümmung aufweisen kann. Beispielsweise kann der Turm 2 bzw. dessen Hüllfläche 16 eine leicht birnenförmige oder leicht ballige Aussenkonturierung besitzen. Die Hüllfläche 16 des Auslegers 3 kann eine flache Bodenfläche, entlang derer die Laufkatze 4 verfahrbar ist, sowie einen bogenförmig gekrümmten Rücken aufweisen, vgl. Fig. 1. Der Querschnitt der Hüllflächen 16 des Turms 2 und/oder des Auslegers 3 können dabei hinsichtlich Form und Maßen variieren, wie dies eingangs näher erläutert wurde. Beispielsweise kann die Hüllfläche 16 des Turms 2 an dessen Fuß und/oder dessen Schulter im Querschnitt eher mehr kreisförmig sein, während in einem mittleren Abschnitt des Turms die Hüllfläche 16 eine stärker elliptische oder ovale Querschnittskonturierung haben kann.

Alternativ oder zusätzlich zu solchen organischen Hüllflächen kann das Tragwerk 8 auch organisch und/oder bionisch konturierte Tragwerksstreben 9 in Form von Längsgurten und/oder Querstreben umfassen, die grundsätzlich gerade Längserstreckungen, jedoch auch gekrümmte Längsachsenverläufe haben können, wobei die genannte Tragwerksstreben 9 auch mehrachsig gekrümmt sein können und/oder entlang ihrer Längserstreckung betrachtet sich mehrfach verändernde Krümmungsradien und/oder sich stufenlos ändernde Krümmungsradien aufweisen können.

Wie die Figuren 2 bis 9 näher zeigen, können die Tragwerksstreben 9 des Tragwerks 8 partiell unterschiedliche bzw. variierende Wandstärken, Querschnittsmaße oder Materialbeschaffenheiten aufweisen, um das jeweilige Tragwerksbauteil möglichst optimal an die jeweilige Beanspruchung und der sich hieraus ergebenden Kraftflüsse und Spannungsverläufe anzupassen. Insbesondere können die Tragwerksteile partielle Verstärkungsabschnitte 11 aufweisen, die im Schichtaufbau ausgebildet sein und integral einstückig, nahtfrei und flächig an den restlichen Korpus des Tragwerkelements angeformt sein können.

Unabhängig von lokal variierenden, insbesondere organisch konturierten Streben- und/oder Schichtgeometrien können aber auch partiell unterschiedliche Materialeigenschaften realisiert werden, insbesondere lokal erhöhte Materialfestigkeiten und/oder lokal erhöhte Korrosionsbeständigkeiten und/oder lokal variierende Elastizitäten und/oder Nachgiebigkeiten. Dies kann beispielsweise durch Schichten aus unterschiedlichen Materialien, oder auch Schichten aus zwar gleichartigen Materialien, jedoch mit unterschiedlichen Materialeigenschaften - beispielsweise durch unterschiedliche Schmelzvorgänge oder Schmelztemperaturen oder Bestrahlungstemperaturen oder -intensitäten und/oder -dauer - erzielt werden. Alternativ oder zusätzlich können aber auch innerhalb ein und derselben Druckschicht verschiedene Materialien Verwendung finden, beispielsweise in einem Abschnitt derselben Schicht ein härteres Material und in einem anderen Abschnitt der Schicht ein weicheres Material Verwendung finden.

Insbesondere können folgende lokale Anpassungen der Materialeigenschaften und/oder Materialien im Druckprozess realisiert werden:
- höhere Materialfestigkeiten an den Lochleibungen von Bohrungen, um hohe Berührungsspannungen (Lochleibungsspannungen) aufnehmen zu können und die Zähigkeit des umgebenden Materials trotzdem zu erhalten
- höhere Materialfestigkeiten des gesamten Bolzenauges, um die Geometrie des Auges möglichst kompakt zu halten
- Erzeugung von korrosionsbeständigen Oberflächen, z. Bsp. in Bohrungen, die nicht durch korrosionsverhindernde Überzüge (Beschichtung) geschützt werden können, insbesondere wenn es bei Lastwechseln Bewegung zwischen den Verbindungselementen gibt
- Erzeugung von korrosionsbeständigen Oberflächen in Bereichen, wo Bauteilbewegungen vorhanden sind, die Flächen aber nicht durch andere Massnahmen wirtschaftlich korrosionsbeständig gemacht werden können (z. Bsp. Gleitlager)
- Erzeugung von korrosionsbeständigen Oberflächen in Bereichen, wo Laufräder verfahren und alternative Korrosionsschutzmassnahmen aufwendig oder nicht dauerhaft sind
- Erzeugung von weniger festen aber elastischen Bereichen an Stellen, wo Querschnittssprünge bestehen und die dadurch vorhandene Kerbwirkung die Betriebsfestigkeit der Bauteile reduziert
- Erzeugung von verschleissfesten Oberflächen nur dort wo sie gebraucht werden, z. Bsp. auf der Laufbahn von Rollen an Auslegerelementen, die von Laufkatzen überfahren werden.

Alternativ oder zusätzlich zu solchen partiell variierenden Materialeigenschaften können aber auch lokal variierende Strebeneigenschaften dadurch erzielt werden, dass die Anzahl und/oder der Verlauf und/oder die Geometrie der Materialschichten lokal verändert und/oder Strebengeometrien im Querschnitt und/oder im Längsschnitt variiert, insbesondere organisch und/oder kontinuierlich variiert werden.

Beispielsweise zeigt Fig. 2 ein Tragwerkselement 9 der Laufkatze 4 des Krans 1 aus Fig. 1, wobei das genannte Tragwerkselement 9 insgesamt betrachtet eine etwa U-förmige Konturierung besitzt. Das Tragwerkselement 9 kann dabei zumindest abschnittsweise als Hohlprofil 10 ausgebildet sein. In den besonders stark belasteten Übergangs- bzw. Abwickelungsabschnitten zwischen den Schenkeln sowie im Zentralbereich des Mittelschenkels, können im Inneren des Hohlprofils 10 Verstärkungsabschnitte 11 ausgebildet sein, die beispielsweise in Form von Versteifungsrippen und/oder in Form eines Röhrenprofils ausgebildet sein können. Vorteilhafterweise kann das Tragwerkselement 9 der Laufkatze 4 im 3D-Druckverfahren aus einem metallischen Werkstoff gefertigt sein, sodass die Verstärkungsabschnitte 11 im Inneren des Hohlprofils 10 schichtweise aufgebaut sind.

Wie Fig. 3 zeigt, kann eine Tragwerksstrebe 9 auch eine näherungsweise gerade Längserstreckung aufweisen und an zumindest einem Ende einen Verbindungsabschnitt 15 zum Verbinden mit weiteren Tragwerkselementen aufweisen. Ein solcher Verbindungsabschnitt 15 kann beispielsweise in Form eines angeformten Bolzenauges oder einer Flanschöse ausgebildet sein, wobei die genannten Verbindungsmittel 15 integral einstückig nahtfrei an das Hohlprofil 10 des Tragwerkelements angeformt sein können. Wie Fig. 3 verdeutlicht, kann das Tragwerkselement sowohl Hohlprofilabschnitte als auch Vollmaterialabschnitte umfassen, wobei die Übergängen zwischen Vollmaterial- und Hohlprofilabschnitten vorteilhafterweise harmonisch und stufenlos ausgebildet sind, insbesondere durch einen gerundeten Übergang der Hohlprofil wandung in dem Vollprofilabschnitt.

Im Bereich des besagten Verstärkungsabschnitts 11, der einen Vollmaterialabschnitt bilden kann, können Schichten aus höherfestem Werkstoff ausgebildet sein, um speziell im Bereich der Anschlussmittel höhere Festigkeiten zu erzielen.

Wie Fig. 4 zeigt, kann eine Tragwerksstrebe 9 nicht nur kreisförmige oder gerundete Querschnittsprofile besitzen, sondern auch ein Hohlprofil 10 mit eckigem und/oder polygonalem Querschnitt aufweisen.

Die Wandung des Hohlprofils 10 geht zu dem Verbindungsabschnitt 15 hin stufenlos in den Vollmaterialabschnitt des genannten Verbindungsabschnitts 15 über. Insbesondere kann ein Verstärkungsabschnitt 13 eine Wandstärkeverdickung 14 umfassen, die sich im Querschnitt betrachtet über dem gesamten Umfang des Hohlprofils 10, aber auch nur in Segmenten des Querschnitts erstrecken kann, wie dies Fig. 4 zeigt.

Vorteilhafterweise kann eine Tragwerksstrebe 9 über ihre Längserstreckung betrachtet auch einen variierenden Querschnitt aufweisen, wobei insbesondere in einem Mittelabschnitt 9m der Tragwerksstrebe 9 ein größerer oder maximaler Querschnitt vorgesehen sein kann, der sich zu den Enden der Tragwerksstrebe 9 hin verkleinert bzw. minimiert. Hierdurch kann im Mittelabschnitt 9m eine höhere Knick- bzw. Beulsteifigkeit erzielt werden, was insbesondere bei Verwendung der Tragwerksstrebe 9 als Druckstab vorteilhaft ist. Wird die Tragwerksstrebe 9 auf Biegung beansprucht, können durch eine solche sich zur Strebenmitte hin vergrößernden Querschnittsbemessung auch dort höhere Biegespannungen besser abgefangen werden.

Alternativ oder zusätzlich zu einer solchen Durchmesserveränderung kann das Tragwerkelement auch eine sich über die Länge ändernde Wandstärke besitzen, wie dies die Teilansicht (d) verdeutlicht, die gleichzeitig zeigt, dass die Tragwerksstrebe 9 als Hohlprofil 10 ausgebildet sein kann. Insbesondere kann die Wandstärke des Hohlprofilabschnitts zu einer Strebenmitte hin zunehmen und/oder zu Strebenenden hin abnehmen, wobei gegebenenfalls an den Strebenenden selbst eine erneute Wandverdickung vorgesehen sein kann, um dort einzuleitende Kräfte und/oder zu befestigende Verbindungsmittel besser abzufangen.

Wie Fig. 6 zeigt, können an den Endabschnitten der Tragwerksstrebe 9 auch Verbindungsabschnitte 15 beispielsweise in Form von Verbindungsflanschen unmittelbar angeformt sein, wobei die genannten Verbindungsabschnitte 15 in Form der Endflansche als Vollmaterialkorpus ausgebildet sein können, während der Strebenkorpus im Übrigen als Hohlprofil 10 ausgebildet sein kann.

Unabhängig hiervon können in einem Hohlprofilabschnitt 10 des Tragwerkelements 9 innenliegenden Verstärkungsabschnitte 11 in Form von Querversteifungswänden vorgesehen sein, vgl. Fig. 8, dort Teilansicht (b).

Wie Fig. 7 zeigt, kann eine Tragwerksstrebe 9 auch einen integral angeformten, einstückig und nahtfrei ausgebildeten Verschraubungsabschnitt 18 umfassen, der ebenfalls in der vorgenannten Weise schichtenweise aufgebaut, insbesondere durch 3D-Druck hergestellt sein kann. Der Gewindeabschnitt 18 kann dabei als Außengewinde und/oder als Innengewinde ausgebildet sein.

Wie Fig. 8 zeigt, können an einem Fachwerksknoten des Fachwerks 8 mehrere Tragwerkstreben 9 beispielsweise in Form eines Längsgurts und mehrerer Querstreben miteinander verbunden sein, wobei vorteilhafterweise die genannten, mehreren Tragwerksstreben 9 integral einstückig, materialhomogen und nahtfrei miteinander verbunden sein können, beispielsweise durch Herstellung des Knotenpunkts und der zugehörigen Strebenabschnitte durch 3D-Druck.

Die miteinander verbundenen Fachwerksstreben 9 sind hierbei zumindest teilweise und/oder zumindest abschnittsweise als Hohlprofil 10 ausgebildet. Außerdem sind die genannten Tragwerksstreben 9 im Bereich des Knotenpunkts durch einen Verstärkungsabschnitt 11 verstärkt, welcher Verstärkungsabschnitt 11 vorteilhafterweise im Inneren eines Hohlprofils 10 angeordnet sein kann.

Wie Fig. 8, dort Teilansicht (e) zeigt, kann der Verstärkungsabschnitt 11 dabei eine Wabenstruktur 13 umfassen, die bei leichter Bauweise eine signifikante Festigkeitserhöhung bewirken kann.

Alternativ oder zusätzlich zu einer solchen Wabenstruktur 13 kann der Verstärkungsabschnitt 11 auch eine Röhrenknochenstruktur 17 umfassen, bei der mehrere Röhren nebeneinander erstrecken und miteinander integral einstückig verbunden sein können, vgl. Teilansicht (f) der der Fig. 8.

Alternativ oder zusätzlich kann der Verstärktungsabschnitt 11 auch eine Verästelungsstruktur 13 umfassen, bei der sich mehrere Verästelungsstreben in verschiedenen, dreidimensional orientierten Längserstreckungen erstrecken und eine vogelnestartige Verstärkungsstruktur bilden. Die Verästelungsstreben der Verästelungsstruktur 13 können dabei eine gerade oder eine gebogene bzw. gekrümmte Längserstreckung aufweisen, wobei die Verästelungsstreben vorteilhafterweise integral einstückig miteinander verbunden sind, vgl. Teilansicht (g) der Fig. 8.

Wie Fig. 9 zeigt, weist der Verstärkungsabschnitt 11 alternativ oder zusätzlich zu solchen innenliegenden Strukturen auch Wandverdickungen 14 auf, welche im Bereich der Verbindung mehrerer Fachwerksstreben 9 miteinander vorgesehen sind. Das Hohlprofil weist im Bereich des Knotenpunkts zwischen verschiedenen Tragwerksstreben 9 eine Wandstärkeverdickung 14 auf, die einen sanften, stufenlosen Übergang zu der vergleichsweise dünneren Wandstärke der angrenzenden Strebenabschnitte aufweist.

## Patentansprüche

1. Tragwerk eines Krans, Hebezeugs, Materialumschlaggeräts oder einer ähnlichen Arbeitsmaschine, wobei das Tragwerk zumindest abschnittsweise als Fachwerk ausgebildet ist, dessen Längs- und Quergurte von länglichen Tragwerksstreben (9) gebildet sind, die zumindest abschnittsweise als Hohlprofil ausgebildet und an Knotenpunkten des Fachwerks miteinander verbunden sind, **dadurch gekennzeichnet, dass** zumindest einer der Knotenpunkte des Fachwerks aus einem metallischen Werkstoff schichtenweise aufgebaut ist und mehrere Fachwerkstreben des Fachwerks integral einstückig und nahtfrei miteinander verbindet, wobei zumindest eine der länglichen Tragwerksstreben (9) im Bereich des Knotenpunkts einen integral einstückig angeformten, schichtweise aus einem metallischen Werkstoff aufgebauten Verstärkungsabschnitt (11) in Form einer Wandstärken- und/oder Querschnittsverdickung (14) aufweist, die zu einem benachbarten Tragwerksabschnitt dünnerer Wandstärke und/oder kleineren Querschnitts einen stufenlosen, nahtfreien Übergang besitzt.

2. Tragwerk nach dem vorhergehenden Anspruch, wobei der schichtweise aufgebaute Verstärkungsabschnitt (11) innenseitig an das Hohlprofil (10) integral einstückig angeformt ist.

3. Tragwerk nach einem der vorhergehenden Ansprüche, wobei die Tragwerkstrebe (9) zumindest im Bereich des Verstärkungsabschnitts (11) als Freiformkörper mit sich kontinuierlich und stetig ändernder Wandstärke ausgebildet ist.

4. Tragwerk nach einem der vorhergehenden Ansprüche, wobei der Verstärkungsabschnitt (11) eine im Inneren des Hohlprofils (10) liegende Wabenstruktur (12) oder Röhrenknochenstruktur aufweist.

5. Tragwerk nach einem der vorhergehenden Ansprüche, wobei der Verstärkungsabschnitt (11) eine im Inneren des Hohlprofils (10) liegende Verästelungsstruktur (13) mit unregelmäßig geformten und/oder dreidimensional angeordneten, sich in unterschiedliche Richtungen erstreckenden Verästelungsstreben aufweist, wobei die Verästelungsstreben eine sich über die Längserstreckung der Verästelungsstreben ändernde, vorzugsweise stufenlos ändernde Wandstärke und/oder sich ändernde, vorzugsweise stufenlos ändernde Querschnittsmaße besitzen.

6. Tragwerk nach einem der vorhergehenden Ansprüche, wobei die Tragwerkstrebe (9) an gegenüberliegenden Enden Verbindungsabschnitte (15) zum Verbinden mit weiteren Tragwerkselementen aufweist, wobei die genannte Tragwerksstrebe (9) zumindest in einem Mittelabschnitt (9m) zwischen den beiden Verbindungsabschnitten (15) einen sich vorzugsweise kontinuierlich und stetig ändernden, insbesondere stufenlos ändernden Querschnitt und/oder eine sich vorzugsweise kontinuierlich und stetig ändernde, insbesondere stufenlos ändernde Wandstärke aufweist, wobei vorzugsweise das Querschnittsmaß und/oder die Wandstärke in dem genannten Mittelabschnitt (9m) ein Maximum besitzt und/oder sich von dem genannten Mittelabschnitt (9m) aus zu gegenüberliegenden Seiten hin abnimmt und/oder an den genannten Verbindungsabschnitten (15) wieder zunimmt.

7. Tragwerk nach dem vorhergehenden Anspruch, wobei die Tragwerkstrebe (9) im Querschnitt betrachtet eine sich in Umfangsrichtung ändernde Wandstärke besitzt, die in Umfangsrichtung vorzugsweise stufenlos zunimmt und wieder stufenlos abnimmt und/oder im Längsschnitt betrachtet eine sich ändernde Wandstärke besitzt, die vorzugsweise stufenlos zunimmt und stufenlos wieder abnimmt.

8. Tragwerk nach einem der vorhergehenden Ansprüche, wobei der Knotenpunkt und die zumindest eine Tragwerkstrebe (9) zumindest abschnittsweise durch 3D-Druck gefertigt sind.

9. Tragwerk nach einem der vorhergehenden Ansprüche, wobei die zumindest eine Tragwerkstrebe eine Längsachse mit gebogenem Verlauf besitzt und eine sich über die Längsachse ändernde, vorzugsweise mehrfach ändernde Wandstärke und/oder ein sich über die Längsachse änderndes, vorzugsweise mehrfach änderndes Querschnittsmaß besitzt.

10. Tragwerk nach einem der vorhergehenden Ansprüche, wobei das Tragwerk zumindest abschnittsweise einen länglichen Träger mit einer Tragwerkshüllfläche bildet, die in einem Längsschnitt betrachtet eine gebogene Hüllflächenschnittkontur besitzt, wobei die Hüllfläche (16) in einem Querschnitt betrachtet eine bogenförmige, von der Kreisform abweichende, insbesondere elliptische oder ovale oder tropfenförmige, Hüllflächenschnittkontur besitzt, wobei die im Querschnitt betrachtete Hüllflächenschnittkontur sich in verschiedenen, entlang der Längserstreckung des Tragwerks beabstandeten Querschnitten in der Konturform ändert, insbesondere im Verhältnis der beiden Hauptachsen der Querschnittskontur zueinander.

11. Tragwerk nach einem der vorhergehenden Ansprüche, wobei die zumindest eine Tragwerksstrebe (9) teilweise aus einem Hohlprofil und teilweise aus einem Vollmaterialprofil besteht.

12. Tragwerk nach einem der vorhergehenden Ansprüche, wobei die zumindest eine Tragwerksstrebe (9) zumindest teilweise aus mehreren Metallschichten besteht, die miteinander flächig, integral einstückig verbunden sind, wobei der Verstärkungsabschnitt (11) Schichten aus relativ höherfestem metallischem Werkstoff enthält und von dem genannten Verstärkungsabschnitt beabstandete Tragwerksabschnitte Schichten aus einem relativ niedrigerfestem metallischen Werkstoff umfasst, wobei innerhalb einer Materialschicht ein Schichtabschnitt aus einem relativ höherfesten metallischen Werkstoff und ein Abschnitt aus einem relativ niedrigerfesten metallischen Werkstoff vorgesehen ist.

13. Tragwerk nach einem der vorhergehenden Ansprüche, wobei im Querschnitt oder im Längsschnitt der Tragwerksstrebe Strebenabschnitte verschiedener Materialeigenschaften vorgesehen sind.

14. Arbeitsmaschine mit einem Tragwerk, das nach einem der vorhergehenden Ansprüche 1 bis 13 ausgebildet ist.

15. Arbeitsmaschine nach dem vorhergehenden Anspruch, wobei die Arbeitsmaschine in Form eines Krans, eines Hebezeugs, eines Materialumschlaggeräts, eines Seilbaggers oder einer Baumaschine ausgebildet ist.

16. Kran, insbesondere Turmdrehkran, mit einem Tragwerk, das nach einem der vorhergehenden Ansprüche 1 bis 13 ausgebildet ist.

## Claims

1. Structural frame of a crane, a lifting device, a material handler or a similar machine, wherein the structural frame is at least in part configured as a truss, the longitudinal and transverse belts of which are formed by elongate structural-frame struts (9), which are at least in portions designed as a hollow profile and are interconnected at a node point of the truss, **characterized in that** at least one of the node points of the truss is constructed in a layered manner from a metal material and interconnects a plurality of truss struts of the truss in an integral and seam-free manner, wherein at least one elongate structural-frame strut (9) comprises an integrally molded-on, layered reinforcement portion (11) in the form of a thickened portion (14) in the wall thickness and/or cross section, having a continuous, seam-free transition to an adjacent structural-frame portion having a thinner wall thickness and/or a smaller cross section.

2. Structural frame according to the preceding claim, wherein the layered reinforcement portion (11) is molded integrally to the inside of the hollow profile (10).

3. Structural frame according to one of the preceding claims, wherein the structural-frame strut (9) is designed, at least in the region of the reinforcement portion (11), as a freeform element having a continuously and constantly changing wall thickness.

4. Structural frame according to any one of the preceding claims, wherein the reinforcement portion (11) comprises a honeycomb structure (12) or tubular-bone structure that is inside the hollow profile (10).

5. Structural frame according to any one of the preceding claims, wherein the reinforcement portion (11) comprises a branched structure (13) that is inside the hollow profile (10) and comprises irregularly shaped and/or three-dimensionally arranged branched struts extending in different directions, wherein the branched struts have a wall thickness that changes, preferably gradually changes, over the longitudinal extension of the branched struts and/or have cross-sectional dimensions that change, preferably continuously change.

6. Structural frame according to any one of the preceding claims, wherein the structural-frame strut (9) comprises connecting portions (15) for connection to other structural frame elements at opposite ends, said structural-frame strut (9) having a cross section that preferably continuously and constantly changes, in particular gradually changes, and/or a wall thickness that preferably continuously and constantly changes, in particular gradually changes, at least in a central portion (9m) between the two connecting portions (15), the cross-sectional dimension and/or the wall thickness preferably having a maximum in said central portion (9m) and/or decreasing from said central portion (9m) towards opposite sides and/or increasing again at said connecting portions (15).

7. Structural frame according to the preceding claim, wherein, when viewed in cross section, the structural-frame strut (9) has a wall thickness that changes in the peripheral direction, and preferably gradually increases and gradually decreases again in the peripheral direction and/or has a changing wall thickness which preferably gradually increases and gradually decreases again seen in longitudinal section.

8. Structural frame according to any one of the preceding claims, wherein the node point and the at least one structural-frame strut (9) are produced by 3D printing at least in portions.

9. Structural frame according to any one of the preceding claims, wherein the at least one structural-frame strut has a longitudinal axis having a curved progression and a wall thickness that changes, preferably changes multiple times, over the longitudinal axis and/or a cross-sectional dimension that changes, preferably changes multiple times, over the longitudinal axis.

10. Structural frame according to any one of the preceding claims, wherein the structural frame forms an elongate girder comprising a structural-frame enveloping surface at least in portions, which, when viewed in a longitudinal section, has a curved enveloping-surface sectional contour, wherein the enveloping surface (16), when viewed in cross section, has a curved enveloping-surface sectional contour that is not circular, but is elliptical or oval or droplet-shaped when viewed in cross section, wherein the enveloping-surface sectional contour viewed in cross section changes in different cross sections that are spaced apart along the longitudinal extension of the structural frame, in particular in the relationship between the two main axes of the cross-sectional contour.

11. Structural frame according to any one of the preceding claims, wherein the at least one structural-frame strut (9) consists in part of a hollow profile and in part of a solid-material profile.

12. Structural frame according to any one of the preceding claims, wherein the at least one structural-frame strut (9) consists at least in part of a plurality of metal layers which are integrally interconnected in a planar manner, wherein the reinforcement portion (11) contains layers of a relatively high-strength metal material and structural-frame portions that are spaced apart from said reinforcement portion comprise layers of a relatively low-strength metal material, wherein a layer portion made of a relatively high-strength metal material and a portion made of a relatively low-strength metal material is provided within one material layer.

13. Structural frame according to any one of the preceding claims, wherein strut portions having different material properties are provided in a cross-section or in a longitudinal section of the structural-frame strut.

14. Work machine comprising a structural frame that is designed according to any one of the preceding claims 1 to 13.

15. Work machine according to the preceding claim, wherein the machine is in the form of a crane, a lifting device, a material handler, a cable excavator or a construction machine.

16. Crane, in particular a tower crane, comprising a structural frame that is designed according to any one of the preceding claims 1 to 13.

## Revendications

1. Structure porteuse d'une grue, d'un engin de levage, d'un engin de manutention de matériaux ou d'un engin de travaux publics analogue, la structure porteuse étant réalisée au moins sur certaines parties sous la forme d'un treillis dont les membrures longitudinales et transversales sont formées de traverses (9) allongées de structure porteuse qui sont réalisées au moins sur certaines parties sous la forme d'un profilé creux et qui sont reliées les unes aux autres au niveau de noeuds de la structure porteuse, **caractérisée en ce qu'**au moins un des noeuds de la structure porteuse est conçu par couches en un matériau métallique et relie plusieurs traverses de la structure porteuse les unes aux autres de manière intégrée d'un seul tenant et sans joint, au moins une des traverses (9) allongées de structure porteuse présentant, dans la zone du noeud, une partie de renforcement (11) façonnée de manière intégrée d'un seul tenant sur celle-ci, conçue par couches en un matériau métallique sous la forme d'un épaississement (14) d'épaisseur de paroi ou de section transversale qui possède une transition sans à-coup et sans joint avec une partie de structure porteuse adjacente ayant une épaisseur de paroi plus faible et/ou une section transversale plus faible.

2. Structure porteuse selon la revendication précédente, dans laquelle la partie de renforcement (11) conçue par couches est façonnée de manière intégrée d'un seul tenant sur le côté intérieur du profilé creux (10).

3. Structure porteuse selon l'une des revendications précédentes, dans laquelle la traverse (9) de structure porteuse est réalisée, au moins dans la zone de la partie de renforcement (11), sous la forme d'un corps forgé sans matrice doté d'une épaisseur de paroi qui change en continu et constamment.

4. Structure porteuse selon l'une des revendications précédentes, dans laquelle la partie de renforcement (11) présente une structure en nid d'abeilles (12) ou une structure en forme d'os long située à l'intérieur du profilé creux (10).

5. Structure porteuse selon l'une des revendications précédentes, dans laquelle la partie de renforcement (11) présente une structure de ramification (13) située à l'intérieur du profilé creux (10), dotée de barres de ramification formées de manière irrégulière et/ou disposées en trois dimensions et s'étendant dans des directions différentes, les barres de ramification possédant une épaisseur de paroi qui change sur l'étendue longitudinale des barres de ramification, de préférence qui change sans à-coup et/ou des dimensions de section transversale qui changent, de préférence qui changent sans à-coup.

6. Structure porteuse selon l'une des revendications précédentes, dans laquelle la traverse (9) de structure porteuse présente, à des extrémités opposées, des parties de liaison (15) destinées à la liaison avec d'autres éléments de structure porteuse, ladite traverse (9) de structure porteuse présentant, au moins dans une partie centrale (9m) située entre les deux parties de liaison (15), une section transversale qui change de préférence en continu et constamment, en particulier qui change sans à-coup et/ou une épaisseur de paroi qui change de préférence en continu et constamment, en particulier qui change sans à-coup, la dimension de section transversale et/ou l'épaisseur de paroi possédant de préférence un maximum dans ladite partie centrale (9m) et/ou diminuant depuis ladite partie centrale (9m) vers des côtés opposés et/ou augmentant de nouveau au niveau desdites parties de liaison (15).

7. Structure porteuse selon la revendication précédente, dans laquelle la traverse (9) de structure porteuse, vue en section transversale, possède une épaisseur de paroi qui change dans la direction périphérique, qui, de préférence, augmente sans à-coup et diminue de nouveau dans à-coup dans la direction périphérique et/ou, vue en section longitudinale, possède une épaisseur de paroi qui change, qui, de préférence, augmente sans à-coup et diminue à nouveau sans à-coup.

8. Structure porteuse selon l'une des revendications précédentes, dans laquelle le noeud et l'au moins une traverse (9) de structure porteuse sont fabriqués au moins sur certaines parties par impression 3D.

9. Structure porteuse selon l'une des revendications précédentes, dans laquelle l'au moins une traverse de structure porteuse possède un axe longitudinal s'étendant de manière incurvée et possède une épaisseur de paroi qui change sur l'axe longitudinal, de préférence qui change à plusieurs reprises et/ou une dimension de section transversale qui change sur l'axe longitudinal, de préférence qui change à plusieurs reprises.

10. Structure porteuse selon l'une des revendications précédentes, dans laquelle la structure porteuse forme, au moins sur certaines parties, un support allongé doté d'une surface enveloppante de structure porteuse qui, vu dans une section longitudinale, possède un contour de section de surface enveloppante incurvé, la surface enveloppante (16), vue dans une section transversale, possédant un contour de section de surface enveloppante arqué, différent de la forme circulaire, en particulier elliptique ou ovale ou en forme de goutte, le contour de section de surface enveloppante vu en section transversale changeant de forme de contour dans différentes sections transversales espacées le long de l'étendue longitudinale de la structure porteuse, en particulier en ce qui concerne le rapport des deux axes principaux du contour de section transversale entre eux.

11. Structure porteuse selon l'une des revendications précédentes, dans laquelle l'au moins une traverse (9) de structure porteuse est constituée en partie d'un profilé creux et en partie d'un profilé plein.

12. Structure porteuse selon l'une des revendications précédentes, dans laquelle l'au moins une traverse (9) de structure porteuse est constituée au moins en partie de plusieurs couches métalliques, qui sont reliées les unes aux autres à plat de manière intégrée d'un seul tenant, la partie de renforcement (11) contenant des couches en un matériau métallique relativement plus résistant et des parties de structure porteuse espacées de ladite partie de renforcement comprenant des couches en un matériau métallique relativement moins résistant, une partie de couche en un matériau métallique relativement plus résistant et une partie en un matériau métallique relativement moins résistant étant prévues à l'intérieur d'une couche de matériau.

13. Structure porteuse selon l'une des revendications précédentes, dans laquelle des parties de traverse ayant différentes propriétés relatives au matériau sont prévues dans la section transversale ou dans la section longitudinale de la traverse de structure porteuse.

14. Engin de travaux publics comportant une structure porteuse qui est réalisée selon l'une des revendications précédentes 1 à 13.

15. Engin de travaux publics selon la revendication précédente, l'engin de travaux public étant réalisé sous la forme d'une grue, d'un engin de levage, d'un engin de manutention de matériaux, d'une pelle à câbles ou d'un engin de chantier.

16. Grue, en particulier grue à tour pivotante, comportant une structure porteuse qui est réalisée selon l'une des revendications précédentes 1 à 13.
